Europäisches Patentamt

European Patent Office

Office européen des brevets

(11) Publication number: 0 364 039
A1

## (12) EUROPEAN PATENT APPLICATION

(21) Application number: 89202533.9

(22) Date of filing: 09.10.89

(51) Int. Cl.⁵: H04N 9/31

(30) Priority: 13.10.88 NL 8802513

(43) Date of publication of application:
18.04.90 Bulletin 90/16

(84) Designated Contracting States:
DE FR GB

(71) Applicant: N.V. Philips' Gloeilampenfabrieken
Groenewoudseweg 1
NL-5621 BA Eindhoven(NL)

(72) Inventor: Stroomer, Martinus Victor
Christiaan
c/o INT. OCTROOIBUREAU B.V. Prof.
Holstlaan 6
NL-5656 AA Eindhoven(NL)
Inventor: Van den Brandt, Adrianus Henricus
Johannes
c/o INT. OCTROOIBUREAU B.V. Prof.
Holstlaan 6
NL-5656 AA Eindhoven(NL)

(74) Representative: Peters, Rudolf Johannes et al
INTERNATIONAAL OCTROOIBUREAU B.V.
Prof. Holstlaan 6
NL-5656 AA Eindhoven(NL)

(54) Color television projection system, color recombination system and color selection system for use in such a projection system.

(57) A compact optical projection system with liquid crystal modulators comprises a recombination system (10) which is provided with color-selective mirrors (31, 32) whose normals extend at an angle of less than 45° to the incident light beams. The entrance windows (11, 12, 13) are provided with liquid crystal modulators (41a, 42a, 43a) and polarisers (41b, 42b, 43b) for modulating the light beams. The recombination system (10) is filled with a liquid (18) so that heat developed in the optical elements as a result of absorption of light is efficiently dissipated.

FIG.2

## Color television projection system, color recombination system and color selection system for use in such a projection system.

The invention relates to a projection system for displaying a picture in a color television projection apparatus, which system comprises at least one light source and a color selection system for generating a plurality of color light beams, at least one polarization filter, a plurality of modulation systems which is equal to the number of color light beams for intensity-modulating the color light beams in accordance with the picture to be displayed, a color recombination system for combining the modulated color light beams and a projection lens system for projecting the combined light beams on a projection screen, said color recombination system having a vessel filled with a transparent liquid and being provided with at least one window for the light beams to enter and exit.

The color selection system and the color recombination system may be separate systems within the scope of the present invention, but systems combining both functions are also included. Color television projection is not only understood to mean an apparatus with which only television pictures can be displayed. Apparatus for displaying images generated in a different manner, for example by means of a computer or originating from a digital or analog storage medium and consisting of, for example text of graphic representations are also included.

A projection system of the type described in the opening paragraph is known from US-A 4,425,028. In the projection system described in this Application the light beam from the light source is split into three linearly polarized color light beams via several polarization-sensitive beam splitters used as polarization filters and several color-selective mirrors. The direction of polarization of parts of the color light beams are individually modulated by means of reflective liquid crystal modulators, whereafter the reflected beams are passed to the projection lens via the same color-selective mirrors. The operation of the liquid crystal modulators is based on influencing the direction of polarization of the light incident on a liquid crystal layer. For intensity-modulating the light in the color light beams polarization filters in the form of polarization-sensitive beam splitters are incorporated in the projection system, which filters filter the unwanted polarization component from the light beam propagating towards the projection lens. The combination of the liquid crystal layers and the polarization filters constitutes the modulation systems. The polarization-sensitive beam splitters and also the color-selective mirrors extend at an angle of 45° to the chief rays of the light beams and are accommodated in a vessel filled with a transparent liquid.

Since the faces of the mirrors and the polarization-sensitive beam splitters extend at this angle of 45° to the light beams, the liquid-filled vessel is rather large. The space required for each beam splitter and mirror in the direction of the beam is equal to the width of the beam splitter or mirror. A reduction of the volume of the recombination system can only be achieved by arranging the polarization filters and the color-selective mirrors more transversely to the direction of the beam. However, this means that radiation filtered by the filters can no longer be irradiated from the system but must be absorbed in the polarization filters. This results in a considerable dissipation of energy and hence an increase of the temperature, which has a detrimental influence on the optical properties and the lifetime of the polarization filters. The temperature particularly increases in a compact recombination system, because in this case light beams having a high intensity act on polarization filters having a small surface area. Also the other parts of the modulation systems may absorb a part of the incident light, which results in an increase of temperature. The known projection system does not have any facilities to dissipate the heat developed in the polarization filters and the other components.

The invention has for its object to provide a color television projection system which is compact and in which a satisfactory dissipation of the heat developed as a result of the absorption in the system is ensured. To this end the projection system according to the invention is characterized in that the faces of the polarization filters are substantially perpendicular to the principal axes of the light beams passing therethrough, in that the polarization filters are in thermal contact with the liquid and in that the vessel has a thermally conducting wall portion for dissipating heat from the liquid.

Since the chief rays of the light beams are substantially perpendicular to the faces of the polarization filters, these filters only cover the path length in the direction of the beam to a small extent so that a compact system is possible. The heat developed in the filters is passed on to the liquid, transferred via conduction and convection to the wall of the vessel where it is carried off to the environment. The polarization filters are efficiently cooled in this way. Furthermore, tile projection system comprises a plurality of color-selective or dichroic mirrors for separating and/or recombining the color light beams. It is to be noted that a liquid-filled vessel accommodating dichroic mirrors leads to a considerably cheaper color recombination system than the use of solid prisms of, for example glass in such a system.

An embodiment of the projection system according to the invention is characterized in that the recombination system comprises a dichroic mirror which has two adjoining layers, the first layer having a refractive index of approximately 1 and the second layer having a refractive index which is substantially equal to that of the transparent liquid. Total internal reflection of a color light beam on the interface between the said layers is achieved by suitably providing such a mirror, in conjunction with the light path of the incident light beam, in the color recombination system of the projection system. The color light beam is then folded within the system, which yields a very compact color recombination system.

The modulators for modulating the direction of polarization of the incident light beams can also be integrated advantageously in the color recombination system. Preferably, the projection system according to the invention is characterized in that the modulation systems comprise modulators which are arranged on a window of the liquid-filled vessel and which are in thermal contact with the liquid. A further embodiment of the projection system is characterized in that the modulators comprise a layer of liquid crystal. Since the modulators are composed of a large number of individually controllable elements, unmodulated light can pass between the edges of juxtaposed elements. To prevent this unmodulated light from reducing the quality of the projected picture, a mask for intercepting this light is provided. The absorption occurring in the mask produces an unwanted development of heat. The temperature increase of the modulator is also caused by the polarization filters which are often integrated with the modulators. It is to be noted that a considerable increase of temperature of the modulator is absolutely unwanted. For example, the maximum temperature at which a liquid crystal can still be used as a modulator is approximately 65°C, while an apparatus for general use such as a color television apparatus must be able to continue functioning at an ambient temperature of approximately 45°C. The temperature of the liquid crystal material should thus not exceed the ambient temperature by more than approximately 20°C.

It is to be noted that it is known per se from EP-A 0,239,024 to use a transparent liquid for cooling a liquid crystal modulator in a projection apparatus. However, the liquid vessel in the known apparatus does not comprise any optical components beside the modulator. The known modulator with cooling device is therefore unsuitable for use in a compact color projection system in which a plurality of color light beams is individually modulated in intensity.

A preferred embodiment of the projection system according to the invention is characterized in that the liquid-filled vessel comprises three modulators for three color light beams, two dichroic mirrors, placed in the vessel, one of which has a first layer with a refractive index of approximately 1, which first layer directly adjoins the second layer with a refractive index which is approximately equal to that of the liquid, and an exit window, the optical light paths from each modulator to the exit window extending via at least one of the dichroic mirrors and the light paths having an equal optical path length. Such a projection system comprises a compact color recombination system and may therefore have a small volume and a light weight.

An embodiment of such a projection system according to the invention, comprising one light source and a color selection system for selecting three color light beams and for passing these beams towards the entrance windows of the color recombination system, in which the light path from the light source to the entrance window is equal for each color light beam and in which the color selection system further comprises a first color-selective mirror for splitting a first color beam and a second color-selective mirror for splitting the remaining beam into a second and a third color light beam, is characterized in that the color selection system comprises a first, a second and a third mirror for passing the first color light beam to the first entrance window, a fourth mirror being arranged in the light path between the first and the second color-selective mirror, a fifth mirror being arranged in the light path of the second color light beam and a sixth mirror being arranged in the light path of the third color light beam for passing the second and the third color light beam to the second and the third entrance window, respectively, the first and the fifth mirror being arranged proximate and parallel to each other with their reflective sides remote from each other. In this way a compact color selection system in addition to the compact color recombination system is obtained in the projection system.

A further embodiment of the projection system according to the invention is characterized in that the modulators are reflective and in that a prism is arranged in the light path between the light source and the modulators which prism has a face exhibiting total internal reflection for a light beam coming from the light source. In this embodiment the color recombination system is simultaneously used as a color selection system. Its advantage is that a separate color selection system for generating three different color light beams may be dispensed with and the total projection system thus has smaller dimensions and comprises fewer elements. The prism arranged between the light source and the combined entrance and exit window brings about the separation between the entering and exiting beams.

The invention will now be described by way of example with reference to the accompanying drawings in which

Fig. 1 shows a first embodiment of a projection system according to the invention,

Fig. 2 shows an alternative embodiment of a color recombination system for use in the projection system in which liquid crystal modulators are arranged on the windows,

Fig. 3 shows a projection system according to the invention comprising both a color separation and a color recombination system and

Figs. 4a and 4b show a projection system in which the light beams are reflected by the modulators.

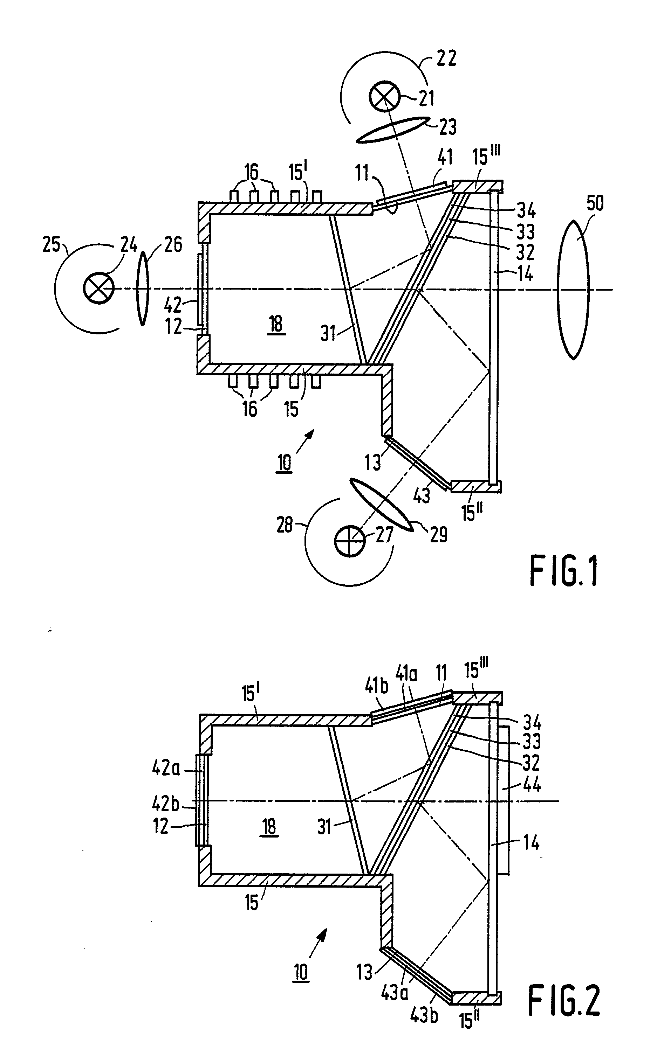

Fig. 1 shows a first embodiment of a projection system according to the invention. The projection system comprises three light sources 21, 24 and 27 for generating three color light beams, a color recombination system 10 and a projection lens system illustrated in the Figure by means of a single lens 50. The light sources have reflectors 22, 25 or 28 and collimator lenses 23, 26 or 29. Each light source emits a color light beam in one of the primary colors red, green or blue. The light sources may generate light in one of the three primary colors or they may be provided with color filters.

Each color light beam is modulated in a modulation system 41, 42 and 43 in accordance with a picture to be displayed, for example a video program and the beams enter the color recombination system 10 via one of the entrance windows 11, 12 or 13. The modulation systems are arranged on the entrance windows. The modulation systems comprise two polarization filters and an interposed layer of liquid crystal material. The liquid crystal material constitutes the actual modulator and rotates the direction of polarization of the light incident through it in dependence upon the intensity of an applied electric field.

The color recombination system consists of a frame some parts 15, 15′, 15″ and 15‴ of which are shown. In addition to the entrance windows 11, 12 and 13 and the exit window 14, the color recombination system comprises two color-selective mirrors 31 and 32. The space 18 within the windows is filled with a transparent liquid, for example an ethyleneglycol solution. The two color-selective mirrors pass radiation in a part of the spectrum and are reflective for another part of the spectrum. The mirror 32 also comprises a layer 33 having a refractive index which is approximately equal to 1, for example an air gap and an adjoining layer 34 having a considerably higher refractive index which is preferably equal to that of the liquid. The color-selective mirror 32 is arranged in such a way that the color beam entering via the first window 11 is incident on the interface between the layers 33 and 34 at an angle at which total internal reflection occurs on this interface so that the light is reflected towards the other mirror 31. The wavelength of the light in this beam is so large that the light is reflected by the mirror 31 and is passed by the mirror 32. The beam is thus reflected on the color-selective mirror 31 in the direction of the exit window 14. Between the mirror 31 and the exit window the beam traverses the color-selective mirror 32 and is incident on this mirror at an angle at which no total reflection occurs on the interface between the layers 33 and 34. The beam thus passes the color-selective mirror 32 and leaves the color recombination system 10 via the exit window 14.

The second color beam entering via the window 12 has a wavelength which is passed by the two color-selective mirrors 31 and 32. Thus, this beam is not reflected on one of the mirrors but it traverses the color recombination system 10 in a straight line and emerges through the exit window 14. The light path of this beam coincides from the color-selective mirror 31 with the light path of the beam which has entered through the first window 11.

The third color beam entering through the window 13 has a wavelength which is reflected by the color-selective mirror 32. The beam is totally reflected on the outer surface of the exit window 14 in the direction of the color-selective mirror 32. The beam is once more reflected on this mirror and subsequently it leaves the recombination system via the window 14 while it coincides with the two previously mentioned beams. The three coincident beams are subsequently projected on a screen (not shown) by means of a projection lens system 50 illustrated in the Figure by means of a single lens.

To make a picture visible with a sufficient brightness on a large screen, the color light beams should have a high intensity. Since a considerable quantity of light is absorbed in the projection system, particularly in the polarization filters but also in the mask and several other components arranged at the layer of liquid crystal, this may lead to a non-negligible increase of temperature. A temperature increase is unwanted because it may change the optical properties and the lifetime of the components. In the projection system according to the invention the temperature of the components remains low because all components are in thermal contact with the liquid and transfer the developed heat thereto. In its turn the liquid carries off heat to its environment via a thermally conducting part of the wall of the vessel. For this purpose the outer side of the vessel may have cooling ribs 16 and other means such as a ventilator may be used to accelerate the dissipation of heat. Furthermore, the vessel has a flexible membrane to compensate for the difference in expansion between liquid and frame.

Fig. 2 shows a further elaboration of the recombination system. The light sources and the projection lens are not shown in this Figure. In the Figure corresponding elements are denoted by the same reference numerals as those in Fig. 1 and they are not further described. Each modulator 41, 42 and 43 on the entrance windows 11, 12 and 13 comprises a layer of liquid crystal 41a, 42a and 43a which is closed on its outer side by a polarization filter 41b, 42b and 43b arranged on a transparent plate. In this way it is achieved that the direction of polarization of the light beam incident through the liquid crystal rotates. A second polarization filter, the analyser 44, is arranged on the exit window 14 so that the differences in direction of polarization of parts of the light beams become visible on the screen as differences in brightness. The liquid crystal modulation systems comprise a large number of independently controllable sub-regions or picture elements so that a picture is composed in accordance with a program to be displayed, for example a video program.

The polarization filters and the previously mentioned mask associated with the electrodes which are required to control the rotation of polarization absorb a considerable part of the energy in the light beams. The temperature increase thereby occurring in the modulators must be limited as much as possible. Since the heat is carried off to the liquid 18 with which the recombination system 10 is filled, a satisfactory cooling is guaranteed. Due to convection in the liquid the heat is transferred to the walls of the frame 15 whereafter it is carried off to the environment.

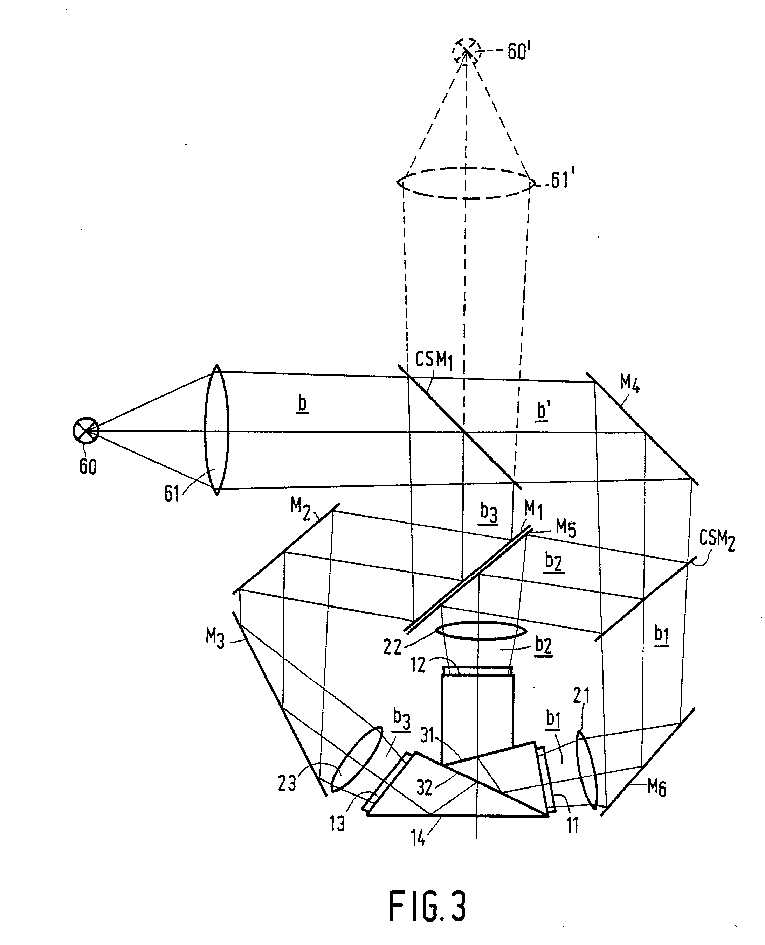

Fig. 3 shows a projection system according to the invention comprising a color recombination system and a color separating system. The color recombination system 10 is only shown diagrammatically and is a system as described hereinbefore. It comprises three entrance windows 11, 12 and 13, two color-selective mirrors 31 and 32 and an exit window 14. The three entering color beams $b_1$, $b_2$ and $b_3$ originate from a white light source 60 which supplies a white beam b via a condensor system 61. The beam b is incident on a first color-selective mirror $CSM_1$ which reflects the red part of the beam in a red beam $b_3$ and which passes the blue and the green part of beam b as beam b'. The red beam is passed to the entrance window 13 of the color recombination system 10 via the mirrors $M_1$,

$M_2$ and $M_3$ and the collimator lens 23. The beam b' comprising the blue and the green light is passed to the second color-selective mirror $CSM_2$ via a mirror $M_4$. This mirror reflects the green light constituting the beam $b_2$ and passes the blue light in the beam $b_1$. The green beam $b_2$ is subsequently passed to the entrance window 12 via the mirror $M_5$ and the collimator lens 22. Analogously, the blue beam $b_1$ is incident on the window 11 via the mirror $M_6$ and the lens 21.

By placing the mirrors $M_1$ and $M_5$ against each other it has been found possible to realise a very compact light path for the color separating system, in which the optical path length between the light source and the modulators at the entrance windows 11, 12 and 13 is equal for each of the color light beams $b_1$, $b_2$ and $b_3$.

The colors of the beams $b_1$, $b_2$ and $b_3$ can easily be exchanged by choosing color-selective mirrors having different transmission and reflection properties. For example, by replacing the mirror $CSM_1$ by a mirror which is reflective to blue and transmissive to red and green and by simultaneously replacing the mirror $CSM_2$ by a mirror which is reflective to green and transmissive to red, it is achieved that the red beam is incident on the window 11 and the blue beam is incident on the window 13.

The position of the light source can also be modified. By arranging, at the position of mirror $CSM_1$, a color-selective mirror which is transparent to blue and reflective to red and green, the light source can be arranged at the position 60' approximately at the axis of the projection lens system.

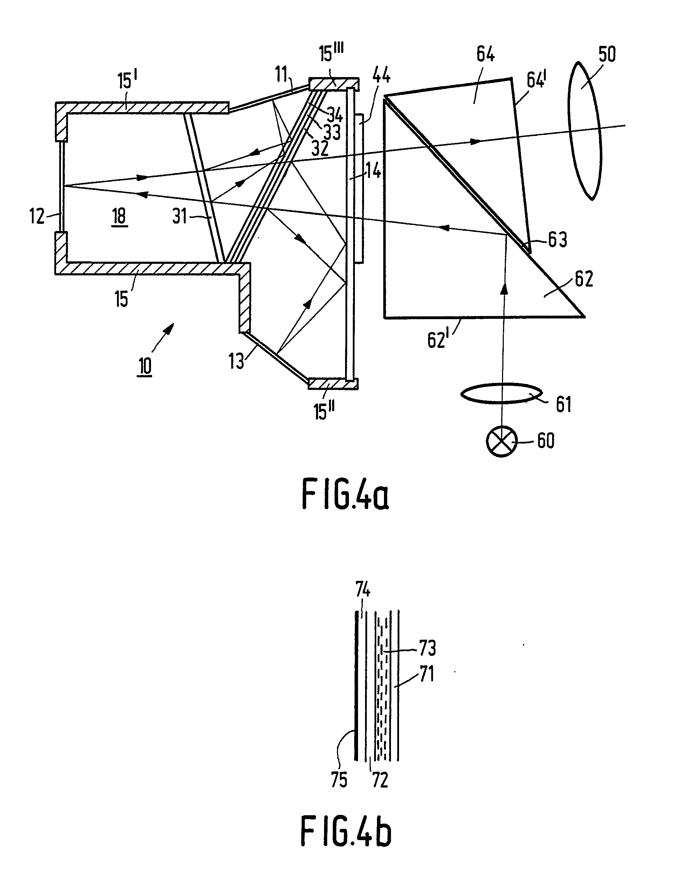

Figs. 4a and 4b show embodiments of the projection system in which the modulation systems are reflective and in which the previously described recombination system is also used for the color separation. The color recombination and color selection system is substantially identical to the recombination system described hereinbefore and the various components have been denoted by the same reference numerals so that a detailed description is not necessary.

The modulators are reflective and constructed, for example as in Fig. 4b. A layer of liquid crystal material 73 in the nematic phase is enclosed between two glass plates 71 and 72. The glass plates 71 and 72 are conventionally provided with orientation layers and electrodes which are not further shown. The glass plate 71 is one of the windows 11, 12 or 13 or is arranged against such a window. A polarization filter 74 and a mirror 75 are arranged on the outside of the other glass plate 72.

When a beam of light is incident through the window 14, it is linearly polarized by the polarization filter 44 and split into three color light beams by the color-selective mirrors 31 and 32. Each of the three polarized color light beams is subsequently incident through a glass plate 71 on the layer of liquid crystal material 73 via one of the windows 11, 12 or 13. In the liquid crystal material the direction of polarization of the light in the beam is rotated, the extent of rotation being dependent on the value of the controllable electric field prevailing between the electrodes. A part of the light is absorbed in the polarization filter 74. The non-absorbed light is reflected by the mirror 75 and traverses the recombination system 10 in the reverse direction and leaves it via the window 14 and the polarization filter 44.

In order to separate the incident beam from the returning modulated beam, a prism 62 is arranged on the outer side of the window 14. This prism is arranged in such a way that the beam from the light source is reflected on the face 63 in the direction of the window 14 by means of total internal reflection. The angle of incidence on the window slightly deviates from a right angle so that the reflected beam extends at a different angle with respect to the face 63 than the beam coming from the light source. The reflected beam coming from the recombination system is not reflected on the face 63 by suitable choice of the position of the face 63 and the refractive index of the material of the prism 62.

The light path of the reflected beam incorporates a second prism 64 arranged between the prism 62 and the projection lens system 50. It is achieved with this prism 64 that the optical thickness of the system is equal throughout the cross-section of the light beam. The light beam therefore sees the system from the entrance face 62' of the entrance prism 62 to the exit face 64' of the exit prism 64 as a plane-parallel plate. The faces 62' and 64' then extend at the same, preferably right angle to the principal axis of the entering and exiting light beam.

It is to be noted that such a system may also be used with other types of reflective modulators. For example, liquid crystal modulators can be used in which use is made of the electrically controlled birefringent properties, or of electrically controlled dispersion in the material instead of the twisted nematic properties. Another example is the use of a so-called "electrophoretic display" as a light-modulating element.

## Claims

1. A projection system for displaying a picture in a color television projection apparatus, which system comprises at least one light source and a color selection system for generating a plurality of color light beams, at least one polarization filter, a plurality of modulation systems which is equal to the number of color light beams for intensity-modulating the color light beams in accordance with the picture to be displayed, a color recombination system for combining the modulated color light beams and a projection lens system for projecting the combined light beams on a projection screen, said color recombination system having a vessel filled with a transparent liquid and being provided with at least one window for the light beams to enter and exit, characterized in that the faces of the polarization filters are substantially perpendicular to the principal axes of the light beams passing therethrough, in that the polarization filters are in thermal contact with the liquid and in that the vessel has a thermally conducting wall portion for dissipating heat from the liquid.

2. A projection system as claimed in Claim 1, characterized in that the recombination system comprises a dichroic mirror which has two adjoining layers, the first layer having a refractive index of approximately 1 and the second layer having a refractive index which is substantially equal to that of the transparent liquid.

3. A projection system as claimed in Claim 1 or 2, characterized in that the modulation systems comprise modulators which are arranged on a window of the liquid-filled vessel and which are in thermal contact with the liquid.

4. A projection system as claimed in Claim 3, characterized in that the modulators comprise a layer of liquid crystal.

5. A projection system as claimed in Claim 4, characterized in that the liquid-filled vessel comprises three modulators for three color light beams, two dichroic mirrors, placed in the vessel, one of which has a first layer with a refractive index of approximately 1, which first layer directly adjoins the second layer with a refractive index which is approximately equal to that of the liquid, and an exit window, the optical light paths from each modulator to the exit window extending via at least one of the dichroic mirrors and the light paths having an equal optical path length.

6. A projection system as claimed in Claim 5, which comprises one light source and a color selection system for selecting three color light beams and for passing said beams towards the entrance windows of the color recombination system, in which the light path from the light source to the entrance window is equal for each color light beam and in which the color selection system further comprises a first color-selective mirror for splitting a first color beam and a second color-selective mirror for splitting the remaining beam into a second and a third color light beam, characterized in that the color selection system comprises a first, a second and a third mirror for passing the first color light beam to the first entrance window, a fourth mirror being arranged in the light path between the first and the second color-selective mirror, a fifth mirror being arranged in the light path of the second color light beam and a sixth mirror being arranged in the light path of the third color light beam for passing the second and the third color light beam to the second and the third entrance window, respectively, the first and the fifth mirror being arranged proximate and parallel to each other with their reflective sides remote from each other.

7. A projection system as claimed in Claim 1, 2, 3, 4 or 5, characterized in that the modulators are reflective and in that a prism is arranged in the light path between the light source and the modulators, which prism has a face exhibiting total internal reflection for a light beam coming from the light source.

8. A vessel suitable for use in a projection system as claimed in any one of the preceding Claims.

9. A color selection system comprising two color-selective mirrors and six reflective mirrors for use in a projection system as claimed in Claim 6.

FIG.1

FIG.2

FIG.3

# FIG.4a

# FIG.4b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,D | EP-A-0 083 090 (HUGHES AIRCRAFT CO.) <br> * Page 6, line 22 - page 11, line 27 * <br> --- | 1 | H 04 N 9/31 |
| A | US-A-4 151 554 (TUCKER) <br> * Column 4, lines 16-32 * <br> ----- | 1 | |

TECHNICAL FIELDS
SEARCHED (Int. Cl.5)

H 04 N

The present search report has been drawn up for all claims

| Place of search | Date of completion of the search | Examiner |
|---|---|---|
| THE HAGUE | 08-01-1990 | YVONNET J.W. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P0401)